# EUROPEAN PATENT APPLICATION

(11) **EP 4 692 590 A1**
(43) Date of publication of application: **11.02.2026**
(21) Application number: 24802751.8
(22) Date of filing: 22.04.2024
(51) Int. Cl.: F16F 9/56, F16F 9/32

(54) **SHOCK ABSORBER AND VEHICLE**

(30) Priority: 10.05.2023 CN 202310532820
(71) Applicant: ZHEJIANG ZEEKR INTELLIGENT TECHNOLOGY CO., LTD., Ningbo, Zhejiang 315899 (CN); Zhejiang Geely Holding Group Co., Ltd., Hangzhou, Zhejiang 310051 (CN)
(72) Inventor: LU, Yongzhi, Ningbo, Zhejiang 315899 (CN); DING, Ren, Ningbo, Zhejiang 315899 (CN); MA, Zuguo, Ningbo, Zhejiang 315899 (CN); YU, Jiang, Ningbo, Zhejiang 315899 (CN); GAO, Shuai, Ningbo, Zhejiang 315899 (CN)
(74) Representative: Range, Christopher William
(86) International application number: PCT/CN2024/089214
(87) International publication number: WO 2024/230466

(57) **Abstract**

Provided are a shock absorber (100) and a vehicle (1000). The shock absorber (100) is applied in the vehicle (1000). The shock absorber (100) includes a wishbone (10), an outer cylinder (20), and an adjustment assembly (30). The wishbone (10) has a receiving recess (12). The outer cylinder (20) includes a connection end (22). The adjustment assembly (30) includes a stator (32) fixedly disposed on the wishbone (10) and a rotor (35) rotatably disposed in the receiving recess (12). The rotor (35) is in threaded engagement with the connection end (22). The rotor (35) is driven to rotate through an electromagnetic cooperation between the stator (32) and the rotor (35) to drive the connection end (22) to rotate out of or into the receiving recess (12), adjusting a length of the shock absorber (100).

## Description

### CROSS-REFERENCE TO RELATED APPLICATION

This application claims priority to and the benefit of patent application No. 202310532820.4 filed with China National Intellectual Property Administration on May 10, 2023, the entire contents of which are incorporated herein by reference.

### FIELD

The present disclosure relates to the field of vehicle technologies, and more particularly, to a shock absorber and a vehicle.

### BACKGROUND

A vehicle includes a vehicle frame, a vehicle body, and a suspension system. The vehicle body is disposed on the vehicle frame by the suspension system. The suspension system includes a shock absorber, which can reduce transmission of vibration from the vehicle frame to the vehicle body. However, an upper end and a lower end of a conventional shock absorber need to be fixed at hard points. Adjusting a height of the vehicle body requires disassembling the shock absorber and adjusting fixed positions of the hard points, which are inconvenient to operate and involve a large amount of work.

### SUMMARY

Embodiments of the present disclosure provide a shock absorber and a vehicle.

A shock absorber according to embodiments of the present disclosure is applied in the vehicle. The shock absorber includes a wishbone having a receiving recess, an outer cylinder including a connection end, and an adjustment assembly including a stator fixedly disposed on the wishbone and a rotor rotatably disposed in the receiving recess. The rotor is in threaded engagement with the connection end. The rotor is driven to rotate through an electromagnetic cooperation between the stator and the rotor to drive the connection end to rotate out of or into the receiving recess, adjusting a length of the shock absorber.

In the above shock absorber, by providing the adjustment assembly, with the stator and the rotor and through the cooperation of the rotor with the threads of the outer cylinder, the outer cylinder is adjusted to rotate into or out of the receiving recess, adjusting the relative position of the wishbone to the outer cylinder, i.e., adjusting the length of the shock absorber. Therefore, the height of the vehicle body can be adjusted without disassembling the shock absorber, which is convenient to operate and can reduce workload.

In some embodiments, the shock absorber includes balls. The connection end has external threaded grooves formed at an outer side wall of the connection end, and the balls are engaged into the external threaded grooves. The rotor has internal threaded grooves formed at an inner side wall of the rotor, and the balls are engaged into the internal threaded grooves. A portion of the balls is disposed in the external threaded grooves, and another portion of the balls is disposed in the internal threaded grooves. The connection end is driven by the rotor through engagements of the balls with the external threaded grooves and the internal threaded grooves to rotate into or out of the receiving recess.

In some embodiments, the shock absorber includes a bearing disposed at an end of the rotor. The rotor is connected to the wishbone by the bearing.

In some embodiments, the bearing includes an upper bearing and a lower bearing. The shock absorber includes an upper housing connected to an end of the wishbone. An end of the rotor is connected to the upper housing by the upper bearing, and another end of the rotor is connected to the wishbone by the lower bearing.

In some embodiments, a bottom of the receiving recess protrudes outwardly to form a protruding ring, and the stator is connected to the wishbone by the protruding ring.

In some embodiments, the shock absorber includes a limiting block disposed between the upper housing and the stator. The limiting block is configured to cooperate with the upper housing to fix the stator.

In some embodiments, a bottom of the receiving recess is depressed inwardly to form an extension recess. An end of the rotor close to the extension recess extends into the extension recess to form an engagement end. A part of the connection end and the engagement end are disposed in the extension recess.

In some embodiments, the shock absorber includes a dust cover disposed on the upper housing. A through hole is formed at a center of the upper housing, and the outer cylinder passes through the through hole. The dust cover is configured to cooperate with the outer cylinder to seal the through hole.

In some embodiments, the upper housing has an inclined surface at a top of the upper housing.

In some embodiments, the shock absorber further includes a sealing gasket disposed between the upper housing and the wishbone. The sealing gasket is configured to seal the receiving recess.

In some embodiments, the shock absorber includes a wire harness adapter disposed on the upper housing. The wire harness adapter is electrically connected to the stator.

The wire harness adapter is configured to control a power supply to energize the stator to drive a rotation of the rotor, enabling the connection end to be driven to rotate into or out of the receiving recess, or control the power supply to de-energize the stator to stop the rotation of the rotor, enabling the connection end to reach a predetermined position.

A vehicle is provided according to embodiments of the present disclosure. The vehicle includes the shock absorber according to any one of the above embodiments.

In the above vehicle, by providing the adjustment assembly, with the stator and the rotor and through the cooperation of the rotor with the threads of the outer cylinder, the outer cylinder is adjusted to rotate into or out of the receiving recess, adjusting the relative position of the wishbone to the outer cylinder, i.e., adjusting the length of the shock absorber. Therefore, the height of the vehicle body can be adjusted without disassembling the shock absorber, which is convenient to operate and can reduce workload.

Additional aspects and advantages of the present disclosure will be provided at least in part in the following description, or will become apparent at least in part from the following description, or can be learned from practicing of the present disclosure.

### BRIEF DESCRIPTION OF THE DRAWINGS

The above and/or additional aspects and advantages of the present disclosure will become more apparent and more understandable from the following description of embodiments taken in conjunction with the accompanying drawings.
FIG. 1 is a schematic structural view of a shock absorber according to an embodiment of the present disclosure.
FIG. 2 is a sectional view taken along line A-A in FIG. 1.
FIG. 3 is another schematic structural view of a shock absorber according to an embodiment of the present disclosure.
FIG. 4 is a schematic partial structural view of a vehicle according to an embodiment of the present disclosure.

Description of reference numerals of the accompanying drawings:
100 shock absorber; 10 wishbone; 12 receiving recess; 14 protruding ring; 16 extension recess; 18 connection hole; 20 outer cylinder; 22 connection end; 24 external thread; 26 external threaded groove; 30 adjustment assembly; 32 stator; 34 groove; 35 rotor; 36 internal thread; 38 internal threaded groove; 40 ball; 50 bearing; 52 upper bearing; 54 lower bearing; 59 screw; 60 upper housing; 62 through hole; 70 limiting block; 80 dust cover; 90 sealing gasket; 92 wire harness adapter;
200 chassis;
1000 vehicle.

### DETAILED DESCRIPTION

Embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain, rather than limiting, the embodiments of the present disclosure.

In the description of the present disclosure, it should be understood that, the orientation or the position indicated by terms such as "center," "longitudinal," "lateral," "length," "width," "thickness," "over," "below," "front," "rear," "left," "right," "vertical," "horizontal," "top," "bottom," "inner," "outer," "clockwise," and "anti-clockwise" should be construed to refer to the orientation or the position as shown in the drawings, and is only for the convenience of describing the present disclosure and simplifying the description, rather than indicating or implying that the pointed device or element must have a specific orientation, or be constructed and operated in a specific orientation, and therefore cannot be understood as a limitation of the present disclosure. In the description of the present disclosure, "plurality" means two or more, unless otherwise specifically defined.

In the description of the present disclosure, it should be noted that, unless otherwise clearly stipulated and limited, terms such as "mount," "connect," and "connect to" should be understood in a broad sense. For example, it may be a fixed connection or a detachable connection or an integral connection; mechanical connection or electrical connection; direct connection or indirect connection through an intermediate; or internal communication of two components or the interaction relationship between two components. For those of ordinary skill in the art, specific meanings of the above-mentioned terms in the present disclosure can be understood according to specific circumstances.

Various embodiments or examples for implementing different structures of the present disclosure are provided herein. In order to simplify the description of the present disclosure, components and arrangements of specific examples are described herein. Of course, these specific examples are merely for the purpose of illustration, rather than limiting the present disclosure. Further, the same reference numerals and/or reference letters may appear in different examples of the present disclosure for the purpose of simplicity and clarity, instead of indicating a relationship between different embodiments and/or the discussed arrangements. In addition, the present disclosure provides examples of various specific processes and materials. However, applications of other processes and/or the use of other materials are conceivable for those of ordinary skill in the art.

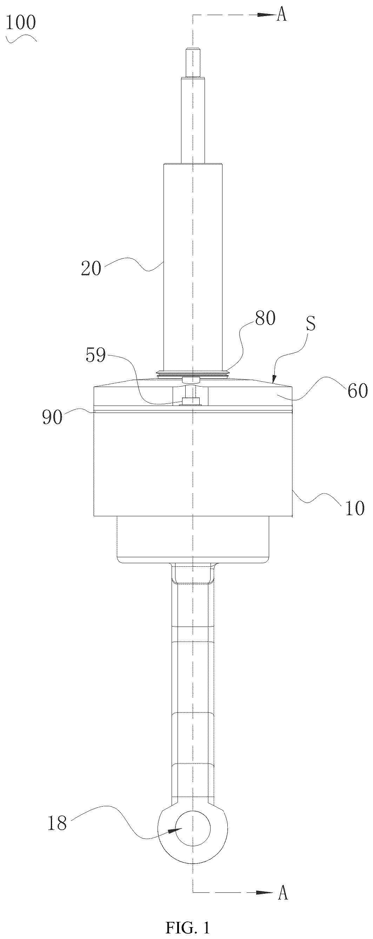

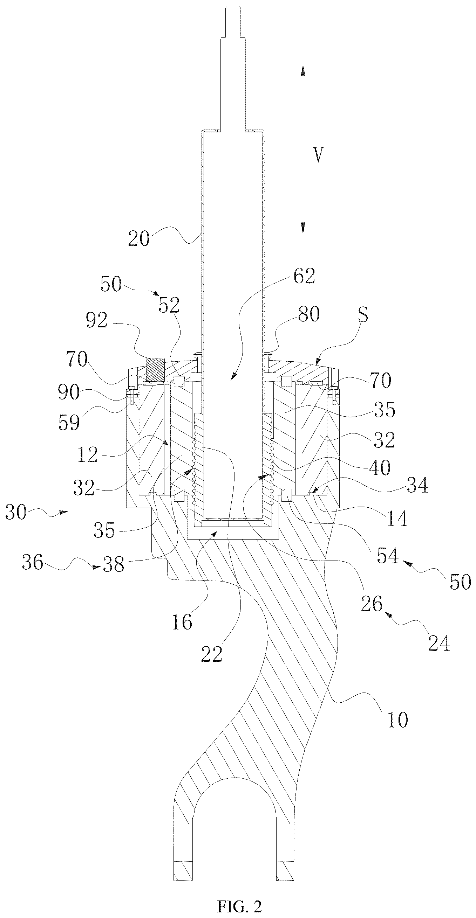

As illustrated in FIG. 1 and FIG. 2, a shock absorber 100 according to an embodiment of the present disclosure is applied in a vehicle 1000. The shock absorber 100 includes a wishbone 10, an outer cylinder 20, and an adjustment assembly 30. The wishbone 10 has a receiving recess 12. The outer cylinder 20 includes a connection end 22. The adjustment assembly 30 includes a stator 32 fixedly disposed in the wishbone 10 and a rotor 35 rotatably disposed in the receiving recess 12. The rotor 35 is in threaded engagement with the connection end 22. The rotor 35 is driven to rotate through an electromagnetic cooperation between the stator 32 and the rotor 35 to drive the connection end 22 to rotate out of or into the receiving recess 12, adjusting a length of the shock absorber 100.

In the above shock absorber 100, by providing the adjustment assembly 30, with the stator 32 and the rotor 35 and through the cooperation of the rotor 35 with the threads of the outer cylinder 20, the outer cylinder 20 is adjusted to rotate into or out of the receiving recess 12, adjusting the relative position of the wishbone 10 to the outer cylinder 20, i.e., adjusting the length of the shock absorber 100. Therefore, the height of the vehicle body can be adjusted without disassembling the shock absorber 100, which is convenient to operate and can reduce workload.

In an exemplary embodiment of the present disclosure, the shock absorber 100 may accelerate attenuation of vibration between a vehicle frame and the vehicle body, improving ride smoothness of a vehicle 1000. In the embodiment illustrated in FIG. 2, the shock absorber 100 is provided with the wishbone 10 and the outer cylinder 20. An end of the wishbone 10 may be depressed inwardly to form the receiving recess 12. The wishbone 10 may have a connection hole 18 formed at another end of the wishbone 10. The other end of the wishbone 10 may be fixedly connected to other components through the connection hole 18. The outer cylinder 20 may be of a cylindrical shape. An end of the outer cylinder 20 may be the connection end 22. The connection end 22 may be disposed in the receiving recess 12. The shock absorber 100 is further provided with the adjustment assembly 30 including the stator 32 and the rotor 35. The stator 32 may be fixedly connected to the wishbone 10 and disposed in the receiving recess 12. The rotor 35 is rotatably disposed in the receiving recess 12. The rotor 35 may have an internal thread 36 formed at an inner side wall of the rotor 35. The connection end 22 may have an external thread 24 formed at an outer side wall of the connection end 22. The rotor 35 may be connected to the connection end 22 through an engagement between the external thread 24 and the internal thread 36. In one embodiment, when being energized, the stator 32 may generate a magnetic field, which in turn drives a rotation of the rotor 35, enabling the connection end 22 to be driven to rotate into or out of the receiving recess 12. In the process of the rotation of the connection end 22 into or out of the receiving recess 12, a relative position of the wishbone 10 to the outer cylinder 20 can be adjusted. That is, the length of the shock absorber 100 can be adjusted. Therefore, the height of the vehicle body can be adjusted without disassembling the shock absorber 100, which is convenient to operate and can reduce the workload.

It should be noted that the rotation of the connection end 22 out of or into the receiving recess 12 means that the connection end 22 is always located in the receiving recess 12 with a position of an end of the connection end 22 close to a bottom of the receiving recess 12 being changed relative to the bottom of the receiving recess 12. In the embodiment illustrated in FIG. 2, when the connection end 22 rotates out of the receiving recess 12, the end of the connection end 22 close to the bottom of the receiving recess 12 may move away from the bottom of the receiving recess 12 in a movement direction of the outer cylinder 20. When the connection end 22 rotates into the receiving recess 12, the end of the connection end 22 close to the bottom of the receiving recess 12 may move towards the bottom of the receiving recess 12 in the movement direction of the outer cylinder 20. The movement direction of the outer cylinder 20 may be denoted by V.

As illustrated in FIG. 2, in some embodiments, the shock absorber 100 includes balls 40. The connection end 22 has external threaded grooves 26 formed at an outer side wall of the connection end 22. The balls 40 are engaged into the external threaded grooves 26. The rotor 35 has internal threaded grooves 38 formed at an inner side wall of the rotor 35. The balls 40 are engaged into the internal threaded grooves 38. A portion of the balls 40 is disposed in the external threaded grooves 26, and the other portion of the balls 40 is disposed in the internal threaded grooves 38. The connection end 22 is driven by the rotor 35 through engagements of the balls 40 with the external threaded grooves 26 and the internal threaded grooves 38 to rotate into or out of the receiving recess 12.

In this way, the rotation of the connection end 22 can be driven through the engagement of the balls 40 with the external threaded grooves 26 and the internal threaded grooves 38, realizing the rotation of the connection end 22 into or out of the receiving recess 12.

In an exemplary embodiment of the present disclosure, as shown in FIG. 2, the shock absorber 100 may be provided with a ball 40. The ball 40 may be disposed between the rotor 35 and the connection end 22. A plurality of balls 40 may be provided. The connection end 22 may have external threaded grooves 26 formed at an outer side wall of the connection end 22. The external threaded grooves 26 may be engaged with the balls 40. The rotor 35 may have internal threaded grooves 38 formed at the inner side wall of the rotor 35. The internal threaded grooves 38 may be engaged with the balls 40. A portion of the balls 40 is disposed in the external threaded grooves 26, and the other portion of the balls 40 is disposed in the internal threaded grooves 38. In one embodiment, the rotor 35 may rotate through electromagnetism. The rotor 35 may be driven to rotate through the engagements of the balls with the external threaded grooves 26 and the internal threaded grooves 38 to drive the connection end 22 to rotate, enabling the connection end 22 to rotate into or out of the receiving recess 12.

As illustrated in FIG. 2, in some embodiments, the shock absorber 100 includes a bearing 50. The bearing 50 is disposed at an end of the rotor 35. The rotor 35 is connected to the wishbone 10 by the bearing 50.

In this way, the rotor 35 can rotate more smoothly, and thus friction between the rotor 35 and the wishbone 10 can be reduced.

In an exemplary embodiment, as illustrated in FIG. 2, the bearing 50 may be disposed in the receiving recess 12. An end of the rotor 35 may be provided with the bearing 50. The bearing 50 may be disposed between the rotor 35 and the wishbone 10. In one embodiment, the rotor 35 may be connected to the wishbone 10 by the bearing 50, allowing the rotor 35 to rotate more smoothly and thus reducing the friction between the rotor 35 and the wishbone 10.

As illustrated in FIG. 2, in some embodiments, the bearing 50 includes an upper bearing 52 and a lower bearing 54. The shock absorber 100 includes an upper housing 60. The upper housing 60 is connected to an end of the wishbone 10. An end of the rotor 35 is connected to the upper housing 60 by the upper bearing 52, and another end of the rotor 35 is connected to the wishbone 10 by the lower bearing 54.

In this way, the upper bearing 52 and the lower bearing 54 are connected at two ends of the rotor 35, enabling the rotor 35 to rotate smoothly, and thus avoiding shaking during the rotation of the rotor 35 while reducing rotational friction.

In an exemplary embodiment of the present disclosure, as shown in FIG. 2, both the upper bearing 52 and the lower bearing 54 are disposed in the receiving recess 12. The upper housing 60 may be disposed at a top of the receiving recess 12 and cover the receiving recess 12. Further, the upper housing 60 may be connected to one end of the wishbone 10. The upper bearing 52 may be disposed between the upper housing 60 and the rotor 35. The lower bearing 54 may be disposed between the rotor 35 and the wishbone 10. In one embodiment, an end of the rotor 35 is connected to the upper housing 60 by the upper bearing 52, and another end of the rotor 35 is connected to the wishbone 10 by the lower bearing 54. In this way, the upper bearing 52 and the lower bearing 54 are connected at two ends of the rotor 35, enabling the rotor 35 to rotate smoothly, and thus avoiding shaking during the rotation of the rotor 35 while reducing rotational friction. In addition, the shock absorber 100 includes a screw 59. The upper housing 60 may be fixedly connected to the wishbone 10 by the screw 59.

As illustrated in FIG. 2, in some embodiments, a bottom of the receiving recess 12 protrudes outwardly to form a protruding ring 14. The stator 32 is connected to the wishbone 10 by the protruding ring 14.

In this way, the stator 32 can be confined on the wishbone 10 by the protruding ring 14, and thus the stator 32 is fixed.

In an exemplary embodiment, as illustrated in FIG. 2, the protruding ring 14 may be formed at the bottom of the receiving recess 12 close to a wall of the receiving recess 12. The protruding ring 14 may protrude from the bottom of the receiving recess 12 towards a top of the receiving recess 12. The protruding ring 14 may be of a circular shape. The end of the stator 32 close to the bottom of the receiving recess 12 may be depressed inwardly to form a groove 34 engaged with the protruding ring 14. In one embodiment, the stator 32 may be engaged to the wishbone 10 through the engagement between the groove 34 and the protruding ring 14, and thus the stator 32 is fixed. Therefore, loosening of the stator 32 is prevented.

As illustrated in FIG. 2, in some embodiments, the shock absorber 100 includes a limiting block 70. The limiting block 70 is disposed between the upper housing 60 and the stator 32. The limiting block 70 is configured to cooperate with the upper housing 60 to fix the stator 32.

In this way, fixation member can be further prevented from moving.

In an exemplary embodiment of the present disclosure, as shown in FIG. 2, the shock absorber 100 may be provided with two limiting blocks 70. The limiting blocks 70 may each be of a rectangular shape. The limiting blocks 70 may be disposed between the upper housing 60 and the stator 32. In one embodiment, the limiting blocks 70 may be mounted at an end of the stator 32, and then the upper housing 60 may be fixedly connected to the wishbone 10, which causes the upper housing 60 to be pressed against the limiting blocks 70. Therefore, the fixation member can be further prevented from moving by the limiting blocks 70.

As illustrated in FIG. 2, in some embodiments, the bottom of the receiving recess 12 is depressed inwardly to form an extension recess 16. The end of the rotor 35 close to the extension recess 16 extends into the extension recess 16 to form an engagement end. A part of the connection end 22 and the engagement end are disposed in the extension recess 16.

In this way, the length of the outer cylinder 20 can be increased to a certain extent, increasing a length of the outer cylinder 20 for rotating in or out. Therefore, a range of adjusting the height of the vehicle body can be increased.

In an exemplary embodiment, as illustrated in FIG. 2, a part of the bottom of the receiving recess 12 close to a center thereof may be depressed inwardly to form the extension recess 16. The rotor 35 may have the engagement end. The engagement end may be disposed at the end of the rotor 35 close to the extension recess 16 and extend into the extension recess 16. In one embodiment, the end of the connection end 22 close to the bottom of the receiving recess 12 may be disposed in the extension recess 16. The engagement end may be inserted into the extension recess 16, and thus the length of the outer cylinder 20 can be increased to a certain extent, increasing the length of the outer cylinder 20 for rotating in or out. Therefore, the range of adjusting the height of the vehicle body can be increased.

As illustrated in FIG. 2, in some embodiments, the shock absorber 100 includes a dust cover 80 disposed on the upper housing 60. A through hole 62 is formed at a center of the upper housing 60. The outer cylinder 20 passes through the through hole 62. The dust cover 80 is configured to cooperate with the outer cylinder 20 to seal the through hole 62.

In this way, the through hole 62 can be sealed to prevent impurities such as other fluids from falling into the receiving recess 12, avoiding damage to parts in the receiving recess 12.

In an exemplary embodiment of the present disclosure, the shock absorber 100 may include the dust cover 80. The dust cover 80 may be of a cylindrical shape. The dust cover 80 may be disposed on the top of the upper housing 60. The through hole 62 may be formed at a center of the top of the upper housing 60. The outer cylinder 20 may pass through the upper housing 60 through hole 62. In one embodiment, the dust cover 80 may be connected to the outer cylinder 20 in a sealed manner, sealing the through hole 62. Therefore, impurities such as other fluids can be prevented from falling into the receiving recess 12, avoiding damage to parts in the receiving recess 12.

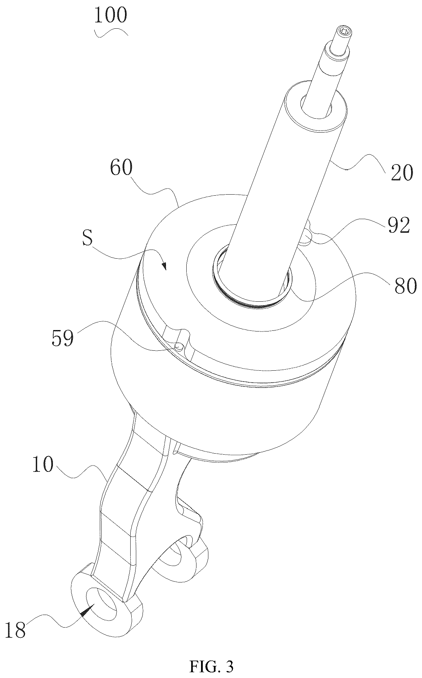

As illustrated in FIG. 2 and FIG. 3, in some embodiments, the upper housing 60 has an inclined surface at a top of the upper housing 60.

In this way, debris such as water can be prevented from accumulating, facilitating drainage and removal of foreign matter.

In an exemplary embodiment, as illustrated in FIG. 3, the upper housing 60 has the inclined surface at the top of the upper housing 60. The inclined surface may be arranged around the center of the top of the upper housing 60. The inclined surface may be denoted by S. In one embodiment, the inclined surface may be inclined from a position close to a center of the top to a position away from the center of the top. Therefore, accumulation of debris such as water can be prevented, which facilitates drainage and removal of foreign matter.

As illustrated in FIG. 2, in some embodiments, the shock absorber 100 further includes a sealing gasket 90. The sealing gasket 90 is disposed between the upper housing 60 and the wishbone 10. The sealing gasket 90 is configured to seal the receiving recess 12.

In this way, the receiving recess 12 can be sealed, and components in the wishbone 10 can be protected from being damaged.

In an exemplary embodiment, as illustrated in FIG. 2, the sealing gasket 90 may be of an annular shape. The sealing gasket 90 may be made of rubber. The sealing gasket 90 may be disposed between the upper housing 60 and the wishbone 10. In one embodiment, before the upper housing 60 covers the receiving recess 12, the sealing gasket 90 may be disposed at an end of the wishbone 10. The upper housing 60 may be pressed against the sealing gasket 90 tightly. Finally, the receiving recess 12 may be sealed through fastening of the screw 59, to protect the components in the wishbone 10 from being damaged.

As illustrated in FIG. 2, in some embodiments, the shock absorber 100 includes a wire harness adapter 92. The wire harness adapter 92 is disposed on the upper housing 60. The wire harness adapter 92 is electrically connected to the stator 32. The wire harness adapter 92 is configured to control a power supply to energize the stator 32 to drive a rotation of the rotor 35, enabling the connection end 22 to be driven to rotate into or out of the receiving recess 12, or control the power supply to de-energize the stator 32 to stop the rotation of the rotor 35, enabling the connection end 22 to reach a predetermined position.

In this way, the rotor 35 can be controlled to rotate or stop the rotation, controlling the length of the outer cylinder 20 for rotating out or in.

In an exemplary embodiment of the present disclosure, as shown in FIG. 2, the wire harness adapter 92 may be disposed on the upper housing 60 and offset from the center of the top of the upper housing 60. The wire harness adapter 92 may be electrically connected to the stator 32. In one embodiment, the harness adapter 92 may control the power supply to energize the stator 32 to drive a rotation of the rotor 35, enabling the connection end 22 to be driven to rotate into or out of the receiving recess 12. In one embodiment, the wire harness adapter 92 may control the power supply to de-energize the stator 32 to stop the rotation of the rotor 35, enabling the connection end 22 to reach a predetermined position. Therefore, the length of the outer cylinder 20 for rotating out or in can be controlled by controlling the rotor 35 to rotate or stop the rotation. It should be noted that the predetermined position refers to a position at which the connection end 22 moves relative to the bottom of the receiving recess 12 by a distance.

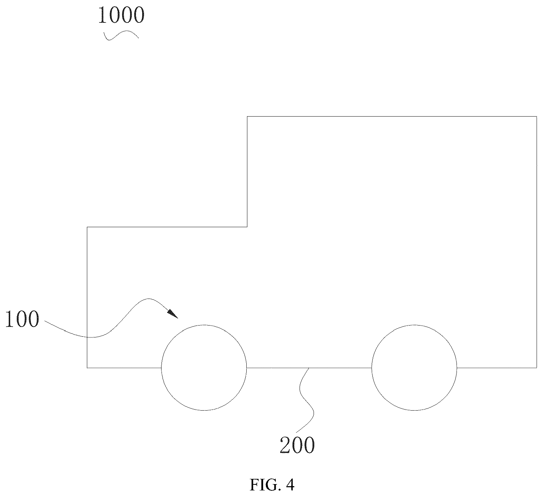

As illustrated in FIG. 4, a vehicle 1000 according to embodiments of the present disclosure includes the shock absorber 100 according to any one of the above embodiments.

In the vehicle 1000 as described above, by providing the adjustment assembly 30, with the stator 32 and the rotor 35 and through the cooperation of the rotor 35 with the threads of the outer cylinder 20, the outer cylinder 20 is adjusted to rotate into or out of the receiving recess 12, adjusting the relative position of the wishbone 10 to the outer cylinder 20, i.e., adjusting the length of the shock absorber 100. Therefore, the height of the vehicle body can be adjusted without disassembling the shock absorber 100, which is convenient to operate and can reduce the workload.

In an exemplary embodiment of the present disclosure, the vehicle 1000 includes, but is not limited to, a fuel vehicle, an electric vehicle, a gas vehicle, and the like. The vehicle 1000 further includes a chassis 200. The shock absorber 100 may be disposed on the chassis 200. Therefore, by providing the adjustment assembly 30, with the stator 32 and the rotor 35 and through the cooperation of the rotor 35 with the threads of the outer cylinder 20, the outer cylinder 20 is adjusted to rotate into or out of the receiving recess 12, adjusting the relative position of the wishbone 10 to the outer cylinder 20, i.e., adjusting the length of the shock absorber 100. Therefore, the height of the vehicle body can be adjusted without disassembling the shock absorber 100, which is convenient to operate and can reduce the workload.

In the present disclosure, the description with reference to the terms "one embodiment," "some embodiments," "an illustrative embodiment," "an example," "a specific example," or "some examples," etc., means that specific features, structures, materials, or characteristics described in conjunction with the embodiment(s) or example(s) are included in at least one embodiment or example of the present disclosure. In the present disclosure, any illustrative reference of the above terms does not necessarily refer to the same embodiment(s) or example(s). Moreover, the specific features, structures, materials, or characteristics as described can be combined in any one or more embodiments or examples as appropriate.

Although embodiments of the present disclosure have been illustrated and described, it is conceivable for those of ordinary skill in the art that various changes, modifications, replacements, and variations can be made to these embodiments without departing from the principles and spirit of the present disclosure. The scope of the present disclosure shall be defined by the claims as appended and their equivalents.

## Claims

1. A shock absorber, applied in a vehicle, **characterized in that** the shock absorber comprises:
a wishbone having a receiving recess;
an outer cylinder comprising a connection end; and
an adjustment assembly comprising a stator fixedly disposed on the wishbone and a rotor rotatably disposed in the receiving recess, wherein the rotor is in threaded engagement with the connection end, and wherein the rotor is driven to rotate through an electromagnetic cooperation between the stator and the rotor to drive the connection end to rotate out of or into the receiving recess, adjusting a length of the shock absorber.

2. The shock absorber according to claim 1, comprising balls, wherein:
the connection end has external threaded grooves formed at an outer side wall of the connection end, the balls being engaged into the external threaded grooves;
the rotor has internal threaded grooves formed at an inner side wall of the rotor, the balls being engaged into the internal threaded grooves;
a portion of the balls is disposed in the external threaded grooves, and another portion of the balls is disposed in the internal threaded grooves; and
the connection end is driven by the rotor through engagements of the balls with the external threaded grooves and the internal threaded grooves to rotate into or out of the receiving recess.

3. The shock absorber according to claim 1, comprising a bearing disposed at an end of the rotor, the rotor being connected to the wishbone by the bearing.

4. The shock absorber according to claim 3, wherein:
the bearing comprises an upper bearing and a lower bearing; and
the shock absorber comprises an upper housing connected to an end of the wishbone,
wherein an end of the rotor is connected to the upper housing by the upper bearing, and another end of the rotor is connected to the wishbone by the lower bearing.

5. The shock absorber according to claim 1, wherein a bottom of the receiving recess protrudes outwardly to form a protruding ring, the stator being connected to the wishbone by the protruding ring.

6. The shock absorber according to claim 4, comprising a limiting block disposed between the upper housing and the stator, the limiting block being configured to cooperate with the upper housing to fix the stator.

7. The shock absorber according to claim 1, wherein a bottom of the receiving recess is depressed inwardly to form an extension recess,
wherein an end of the rotor close to the extension recess extends into the extension recess to form an engagement end, a part of the connection end and the engagement end being disposed in the extension recess.

8. The shock absorber according to claim 4, comprising a dust cover disposed on the upper housing, wherein:
a through hole is formed at a center of the upper housing, the outer cylinder passing through the through hole; and
the dust cover is configured to cooperate with the outer cylinder to seal the through hole.

9. The shock absorber according to claim 4, wherein the upper housing has an inclined surface at a top of the upper housing.

10. The shock absorber according to claim 4, further comprising a sealing gasket disposed between the upper housing and the wishbone, the sealing gasket being configured to seal the receiving recess.

11. The shock absorber according to claim 4, comprising a wire harness adapter disposed on the upper housing and electrically connected to the stator,
wherein the wire harness adapter is configured to:
control a power supply to energize the stator to drive a rotation of the rotor, enabling the connection end to be driven to rotate into or out of the receiving recess; or
control the power supply to de-energize the stator to stop the rotation of the rotor, enabling the connection end to reach a predetermined position.

12. A vehicle, comprising the shock absorber according to any one of claims 1 to 11.
